# FASCICULE DE BREVET EUROPEEN

(11) **EP 2 437 878 B1**
(45) Date de publication et mention de la délivrance du brevet: **02.08.2017**
(21) Numéro de dépôt: 10734233.9
(22) Date de dépôt: 04.06.2010
(51) Int. Cl.: B01J 13/00, B22F 9/18, B22F 9/24

(54) **PROCÉDÉ DE PRÉPARATION D'UNE COMPOSITION ORGANOCOMPATIBLE ET HYDROCOMPATIBLE DE NANOCRISTAUX MÉTALLIQUES ET COMPOSITION OBTENUE**
VERFAHREN ZUR HERSTELLUNG EINER ORGANISCH KOMPATIBLEN UND WASSERKOMPATIBLEN ZUSAMMENSETZUNG AUS METALLNANOKRISTALLEN UND GEWONNENE ZUSAMMENSETZUNG
METHOD FOR PREPARING AN ORGANIC-COMPATIBLE AND WATER-COMPATIBLE COMPOSITION OF METAL NANOCRYSTALS, AND RESULTING COMPOSITION

(30) Priorité: 05.06.2009 FR 0902738
(43) Date de publication de la demande: 11.04.2012
(73) Titulaire: Centre National de la Recherche Scientifique (C.N.R.S.), 75794 Paris Cedex 16 (FR)
(72) Inventeur: KAHN, Myrtil, F-31400 Toulouse (FR); GAUFFRE-GUIRARDEL, Fabienne, F-31520 Ramonville (FR); RUBIO-GARCIA, Javier, E-33450 Piedras Blancas-Asturias (ES); MINGOTAUD, Christophe, F-31400 Toulouse (FR); CHAUDRET, Bruno, F-31320 Vigoulet-Auzil (FR); SALIBA, Sarmenio, Malta BZN 12 (MT)
(86) Numéro de dépôt international: PCT/FR2010/051106
(87) Numéro de publication internationale: WO 2010/139911

(56) Documents cités:
- EP-A2- 1 623 781
- WO-A2-2009/044389
- FR-A1- 2 901 715
- US-A1- 2008 072 706
- US-A1- 2008 134 836
- US-A1- 2008 157 029
- JULIANE KEILITZ, E.A.: "Dendritic Polymers with a Core-Multishell Architecture: A Versatile Tool for the Stabilization of Nanoparticles" CHEMISTRY OF MATERIALS, vol. 20, no. 7, 3 juillet 2008 (2008-07-03), pages 2423-2425, XP002566332

## Description

L'invention concerne un procédé de préparation d'une composition de nanoparticules, dites nanocristaux métalliques, d'au moins un composé métallique cristallin, à partir d'au moins un précurseur organométallique en milieu solvant et en présence d'au moins un ligand choisi dans le groupe des composés organiques présentant au moins une chaîne carbonée et solubles dans ledit milieu solvant. Elle s'étend à une composition de nanocristaux métalliques ainsi obtenue.

Dans tout le texte, on adopte la terminologie suivante :
- nanoparticule : toute particule quelle que soit sa forme, présentant au moins une largeur et une épaisseur toutes deux inférieures à 100nm, typiquement comprises entre 1nm et 20nm ;
- métallique : comprenant au moins un atome métallique notamment pouvant être choisi parmi : l'or, l'argent, le platine, le rhodium, le fer, le cobalt, le cuivre, le nickel, le zinc, l'étain, le titane, le manganèse, le chrome, le vanadium, l'indium, le ruthénium, le palladium, le molybdène, le niobium, le zirconium, le tantale, l'aluminium, le gallium, le tungstène, rhénium, l'osmium, l'iridium ;
- nanocristaux métalliques non oxydés : nanoparticules constituées d'au moins un composé métallique pur à l'état non oxydé cristallin, chaque nanoparticule possédant la structure métallique, c'est-à-dire étant formée d'atomes de métal(aux) liés entre eux comme dans un métal massique ;
- nanocristaux métalliques oxydés : nanoparticules constituées d'au moins un composé métallique pur à l'état cristallin, mais ces nanoparticules ayant subi une oxydation au moins partielle après leur formation, à partir d'un état initial sous forme de nanocristaux métalliques non oxydés ;
- nanocristaux métalliques : nanocristaux métalliques non oxydés ou nanocristaux métalliques oxydés ;
- précurseur organométallique : toute molécule ou composé de coordination contenant au moins un groupement organique lié à au moins un atome métallique par un atome de carbone ou un hétéroatome à l'exclusion de l'oxygène (choisi notamment parmi N, P, As, Si, S, Se, Te), de ce groupement organique ;
- chaîne carbonée : toute chaîne aliphatique, saturée ou non saturée, normale ou ramifiée, substituée ou non, pouvant comprendre des hétéroatomes ;
- milieu solvant : toute composition dans laquelle l'eau et le dioxygène ne peuvent être présents qu'à l'état de traces et apte à former une solution liquide lorsqu'elle est placée au contact d'au moins un composé tel qu'un précurseur organométallique ; elle peut se présenter à l'état initialement liquide, ou au contraire ne passer à l'état liquide qu'après contact avec le(les) composé(s) à solubiliser ; elle peut être simple, c'est-à-dire formée d'un seul composé, ou au contraire complexe et renfermer plusieurs composés ; en particulier, elle peut renfermer non seulement un ou plusieurs composé(s) faisant office d'agent solvant, mais aussi tout autre composé non consommé par la réaction de formation des nanocristaux métalliques -notamment dans une réaction de réduction- sensiblement neutre vis-à-vis de la dissolution du(des) précurseur(s) organométallique(s), et jouant un rôle ou non dans la réaction de formation des nanocristaux métalliques -notamment dans une réaction de réduction- ;
- solution colloïdale : toute composition liquide limpide de nanoparticules solides dispersées dans un liquide ; une solution colloïdale liquide présente de nombreuses propriétés d'une solution liquide vraie mais pas toutes, les nanoparticules restant à l'état solide ; on parle aussi parfois de suspension ou de dispersion colloïdale ;
- composition hydrocompatible de nanoparticules : toute composition de nanoparticules susceptibles d'être dispersées au moins en milieu aqueux, notamment toute composition susceptible de former une solution colloïdale (dispersion liquide) en milieu aqueux ;
- composition organocompatible de nanoparticules : toute composition de nanoparticules susceptibles d'être dispersées dans au moins un milieu organique -notamment non aqueux- protique ou aprotique, notamment toute composition susceptible de former une solution colloïdale (dispersion liquide) avec au moins un tel milieu liquide organique -notamment non aqueux- protique ou aprotique,
- groupement de coordination : tout groupement chimique susceptible de former une liaison covalente, dative, hydrogène ou électrostatique avec les atomes de métaux, les ions métalliques, l'oxygène et les oxydes métalliques.

FR 2678855 décrit un procédé de préparation d'une dispersion de particules métalliques consistant à mettre en solution un précurseur organométallique et une matrice cellulosique dans un solvant organique commun, et à faire agir sur la solution un réducteur en vue de décomposer le précurseur en particules métalliques. Ce procédé donne satisfaction et permet de produire des compositions de particules métalliques qui sont organocompatibles, mais qui ne sont par contre pas hydrocompatibles, c'est-à-dire ne peuvent pas être dispersées dans un solvant aqueux. Il ne permet donc pas d'obtenir une composition hydrocompatible de nanocristaux métalliques.

Le document « Juliane Keilitz et al., Dendritic Polymers with a Core-Multishell Architecture : A Versatile Tool for the Stabilization of Nanoparticles, Chemistry of Materials, (2008), 20 ;7, 2423-2425 » décrit un procédé de fabrication de nanoparticules d'or hydrocompatibles et organocompatibles en plusieurs étapes comprenant une première étape de fabrication de nanoparticules d'or hydrophiles et une deuxième étape de fonctionnalisation de ces particules d'or hydrophiles avec un ligand PEI-C₁₈-PEO.

À ce titre il est à noter que la présence d'une quantité non contrôlée d'eau est strictement incompatible avec une réaction contrôlée en présence d'organométallique(s). En effet, dans le domaine technique des organométalliques, l'eau est considérée systématiquement comme nuisible, voire dangereuse. Plus particulièrement, dans le cas d'une réaction de réduction à partir d'un précurseur organométallique, il est considéré que la présence d'une quantité non contrôlée d'eau dans le milieu aurait nécessairement pour conséquence à tout le moins de perturber considérablement, voire d'empêcher le fonctionnement de la réaction. En effet, on sait que toute présence incontrôlée d'eau conduit immanquablement à la formation des hydroxydes métalliques (décompositions destructives et exothermiques du type de Zerewitinoff) et est destructrice et nuisible dans le cadre de la préparation et de l'utilisation des composés organométalliques. Au demeurant, les réactions en présence d'organométalliques sont le plus souvent réalisées en présence d'un piège à eau de façon à travailler en atmosphère sèche.

Or, il serait utile de permettre l'obtention de telles compositions de nanocristaux métalliques qui soient hydrocompatibles, et plus particulièrement à la fois organocompatibles et hydrocompatibles, c'est-à-dire qui puissent être dispersées à la fois et selon les besoins dans les milieux aprotiques -notamment organiques non aqueux-, et dans les milieux protiques -notamment l'eau et les milieux aqueux-. En particulier l'obtention de telles compositions hydrocompatibles est importante pour permettre leur utilisation dans de nombreuses applications, notamment dans les milieux physiologiques, à titre thérapeutique ou pour l'imagerie médicale, et dans toutes les applications pour lesquelles on cherche à éviter l'emploi de solvants organiques qui sont des composés organiques volatils (COV) toxiques et/ou polluants dont l'usage doit être limité, voire supprimé, compte tenu des règles de respect de l'environnement.

En outre, la réalisation dans une première étape de nanocristaux métalliques non oxydés hydrocompatibles et leur dispersion, dans une deuxième étape, en milieu aqueux pourrait permettre d'obtenir, dans le cas de certains métaux oxydables, des nanocristaux de très faibles dimensions à l'état au moins partiellement oxydé.

Il a déjà été proposé de préparer des solutions colloïdales de particules métalliques en milieu aqueux au moyen d'un réducteur mis en solution dans le milieu (ascorbate, citrate...) à la température de reflux, en présence ou non d'un stabilisant. Un tel procédé ne permet pas d'obtenir une composition organocompatible, s'accompagne de la formation de produits secondaires polluants, et ne permet pas d'obtenir des particules nanométriques, présentant au moins une dimension inférieure à 5 nm.

Différents procédés ont aussi déjà été proposés pour permettre de rendre hydrocompatibles des compositions de nanocristaux métalliques initialement non hydrocompatibles.

Une première approche pourrait consister à échanger les ligands hydrophobes par des ligands analogues mais présentant des groupes hydrophiles tels que des polymères dérivés de PEG (thiol-PEG, amino-PEG, carboxy-PEG). Cette approche nécessiterait cependant une deuxième étape relativement complexe et dont le rendement n'est pas très bon. En outre elle n'aboutirait pas à des nanocristaux exclusivement dotés de ligands hydrophiles, la réaction d'échange n'étant jamais totale.

Une deuxième approche consiste à incorporer dans la composition obtenue des ligands amphiphiles susceptibles d'interagir avec les ligands hydrophobes issus de la préparation des nanoparticules, sans remplacer ces ligands hydrophobes, en formant des structures de bicouches autour des nanoparticules. Les compositions obtenues avec cette approche peuvent présenter une certaine toxicité (par libération de composés amphiphiles), et une stabilité mal contrôlée, ce qui est un inconvénient notamment dans les applications biologiques et thérapeutiques.

Dans certains cas très spécifiques, une autre approche peut consister à choisir un ligand présentant, à l'une des extrémités de la chaîne alkyle aliphatique, un groupement permettant ultérieurement de réaliser des réactions chimiques pour le greffage d'un groupement hydrophile. Mais, là encore, une étape supplémentaire est nécessaire, et cette approche n'est possible que dans des cas très particuliers, peu utiles en pratique.

En outre, ces différentes approches présentent aussi le plus souvent l'inconvénient que les compositions de nanoparticules modifiées pour être hydrocompatibles ne sont plus, ultérieurement, organocompatibles dans des conditions satisfaisantes.

L'invention vise donc à proposer un procédé de préparation d'une composition de nanocristaux métalliques qui, d'une part, soit à la fois organocompatible et hydrocompatible ce qui, jusqu'à maintenant, était considéré comme parfaitement impossible, et, d'autre part, dans laquelle les nanocristaux présentent au moins une dimension -notamment une dimension moyenne- inférieure à 5 nm.

Plus particulièrement l'invention vise à proposer un procédé permettant d'obtenir une composition de nanocristaux métalliques se présentant sous forme de solution colloïdale et ce quel que soit le milieu solvant, organique ou aqueux, et dont les propriétés restent inchangées en milieu aqueux.

Elle vise également à proposer un tel procédé qui soit simple, rapide, facile à maîtriser, notamment puisse être effectué par synthèse en milieu solvant directement en une seule étape, et qui puisse faire l'objet d'ajustements aisés pour l'obtention de caractéristiques souhaitées des nanocristaux, notamment en ce qui concerne leurs formes et leurs dimensions. Plus particulièrement, l'invention vise à proposer un tel procédé permettant d'obtenir des compositions liquides de nanocristaux métalliques parfaitement dispersés (non agglomérés) dans un milieu solvant pouvant être organique ou aqueux, ces nanocristaux métalliques ayant des formes et dimensions pouvant être contrôlées avec précision et qui sont au moins sensiblement uniformes, c'est-à-dire selon une distribution unimodale, notamment sensiblement homogène (faible dispersion), et pouvant même être monodisperses. Également, l'invention vise à proposer un tel procédé permettant d'obtenir des solutions colloïdales de nanocristaux métalliques aussi bien dans un milieu solvant organique que dans un milieu solvant aqueux.

L'invention vise également à proposer un tel procédé de préparation qui soit simple, réalisé en une seule étape, sans appareillage complexe, exempt de traitement thermique, ne produisant pas de rejets polluants en quantités importantes, et compatible avec une exploitation à l'échelle industrielle dans des conditions économiques satisfaisantes.

L'invention vise également à proposer une composition telle que mentionnée ci-dessus. L'invention vise ainsi à proposer une nouvelle composition de nanocristaux métalliques qui, d'une part, soit à la fois organocompatible et hydrocompatible et, d'autre part, dans laquelle les nanocristaux présentent au moins une dimension -notamment une dimension moyenne- inférieure à 5 nm.

Elle vise en particulier à proposer de nouvelles compositions de nanocristaux métalliques dont les caractéristiques chimiques (métal(aux) contenu(s)) et dimensionnelles n'ont jamais pu être obtenues jusqu'à maintenant.

L'invention vise également à proposer un tel procédé et une telle composition applicables à une grande variété de métaux.

Pour ce faire, l'invention concerne un procédé de préparation d'une composition de nanoparticules métalliques à l'état cristallin, dites nanocristaux métalliques, à partir d'au moins un précurseur organométallique dans lequel :
- on réalise une solution liquide d'au moins un précurseur organométallique, dans un milieu solvant en présence d'au moins un composé, dit ligand organique, présentant au moins une chaîne carbonée dont au moins une extrémité est fonctionnalisée par un groupement de coordination comprenant au moins un hétéroatome, et soluble dans ledit milieu solvant,
- on fait agir, sur cette solution liquide, au moins un réducteur à l'égard de chaque précurseur organométallique dans des conditions réactionnelles adaptées pour entraîner directement la formation des nanocristaux métalliques,
caractérisé en ce qu'on choisit :
- au moins un ligand, dit ligand PEG, dans le groupe des ligands organiques solubles dans l'eau comprenant au moins une chaîne carbonée présentant au moins un groupement (linéaire) polyoxyéthylène [OCH₂CH₂]ₙ, n étant un entier supérieur à 1, et dont au moins une extrémité est fonctionnalisée par un groupement de coordination choisi parmi une amine primaire -R³NH₂, un groupement carboxylique -R⁴COOH, un groupement thiol -R⁵SH, un groupement phosphine -R⁶P(Ph)₂, Ph représentant le phényle, un groupement phosphonate choisi parmi -PO(OR⁷)(OR⁸), -PO(O⁻)₂, et -PO(O⁻)(OH) ; R³, R⁴, R⁵, R⁶, représentant un groupement comprenant au moins une chaîne aliphatique, R⁷ et R⁸ étant choisis parmi un atome d'hydrogène et un groupement comprenant au moins une chaîne aliphatique,
- ledit milieu solvant de façon que chaque ligand PEG soit soluble dans ce milieu solvant,
et de façon à obtenir directement en une étape une composition hydrocompatible et organocompatible de nanocristaux métalliques.

L'invention consiste donc de façon générale en un procédé de préparation de nanocristaux métalliques à partir d'au moins un précurseur organométallique dans lequel :
- on réalise une solution liquide d'au moins un précurseur organométallique, dans un milieu solvant en présence d'au moins un composé, dit ligand organique, présentant au moins une chaîne carbonée dont au moins une extrémité est fonctionnalisée par un groupement de coordination comprenant au moins un hétéroatome, et soluble dans ledit milieu solvant,
- on met cette solution liquide en contact avec au moins un réactif -notamment un réducteur- dans des conditions réactionnelles adaptées pour entraîner directement la formation des nanocristaux métalliques (en une étape et par décomposition de chaque précurseur organométallique),
caractérisé en ce qu'on choisit :
- au moins un ligand, dit ligand PEG, dans le groupe des ligands organiques solubles dans l'eau comprenant au moins une chaîne carbonée présentant au moins un groupement (linéaire) polyoxyéthylène [-OCH₂CH₂]ₙ, n étant un entier supérieur à 1, et dont au moins une extrémité est fonctionnalisée par un groupement de coordination choisi parmi une amine primaire -R³NH₂, un groupement carboxylique -R⁴COOH, un groupement thiol -R⁵SH, un groupement phosphine -R⁶P(Ph)₂, Ph représentant le phényle, un groupement phosphonate choisi parmi -PO(OR⁷)(OR⁸), -PO(O⁻)₂, et -PO(O⁻)(OH) ; R³, R⁴, R⁵, R⁶ représentant un groupement comprenant au moins une chaîne aliphatique, R⁷ et R⁸ étant choisis parmi un atome d'hydrogène et un groupement comprenant au moins une chaîne aliphatique,
- ledit milieu solvant de façon que chaque ligand PEG soit soluble dans ce milieu solvant,
et de façon à obtenir directement en une étape une composition hydrocompatible et organocompatible de nanocristaux métalliques -notamment de nanocristaux métalliques non oxydés-.

Contre toute attente, les inventeurs ont constaté avec la plus grande surprise qu'il est en fait possible de préparer directement une composition de tels nanocristaux métalliques en utilisant, à titre de ligand, au moins un ligand PEG et un solvant compatible avec chaque ligand PEG. En effet, un tel ligand PEG soluble dans l'eau est nécessairement hydrophile, et, comme tel, était considéré jusqu'à maintenant comme parfaitement nuisible vis-à-vis de la réaction et des précurseurs organométalliques, notamment du fait qu'il a *a priori* inévitablement pour conséquence d'introduire de l'eau dans le milieu réactionnel. Or, il s'avère qu'il n'en est rien, pour des raisons qui restent à ce jour encore inexpliquées.

De surcroît, les inventeurs ont constaté que ce résultat étonnant peut être obtenu avec une grande variété de ligands PEG, et qu'il suffit en réalité de remplacer la chaîne alkyle aliphatique hydrocarbonée des ligands utilisés dans l'état de la technique pour l'obtention de nanocristaux métalliques, par une chaîne comprenant au moins un groupement polyoxyéthylène [OCH₂CH₂]ₙ n étant un entier supérieur à 1.

Ce groupement polyoxyéthylène d'un ligand PEG d'une composition de nanocristaux métalliques obtenue par un procédé selon l'invention, est un groupement linéaire non ramifié. De préférence, ladite chaîne carbonée est également une chaîne linéaire non ramifiée. Quoi qu'il en soit, ladite chaîne carbonée présente une chaîne principale linéaire incorporant au moins un - notamment un et un seul- groupement polyoxyéthylène (linéaire non ramifié) tel que mentionné ci-dessus.

Avantageusement, un ligand PEG selon l'invention est un ligand organique qui comprend non seulement au moins un groupement tel que mentionné ci-dessus, mais également, à titre de groupement de coordination, au moins un groupement choisi parmi les carbonyles, les oxydes d'azote, les aminoalcools, les nitriles (en particulier cyano), les thiols, les thiocyanates, les isothiocyanates, les alcynes, les alcènes, les arènes (ex : le cyclopentadiène), les carbènes, les siloxanes, les acides de Lewis tels que les boranes et les aminoboranes, les phosphines, les oxydes de phosphines, les phosphates, les phosphonates, les imines (bases de Schiff), les composés diazo, les amines, les oxydes d'amines, les xanthates (R-OC(S)SR'), les sulfites, les thionyles, les thiosulfates, les sulfates, les cyclodextrines, les époxydes, à l'exception de l'éthylène glycol.

Avantageusement et selon l'invention, on choisit au moins un ligand PEG, dit ligand amino/carboxy PEG, dans le groupe des amines et des acides carboxyliques comprenant au moins une chaîne carbonée présentant au moins un groupement [OCH₂CH₂]ₙ solubles dans l'eau. D'autres composés organiques peuvent être utilisés à titre de ligand PEG (par exemple thiol-PEG, phosphine-PEG...) selon les applications, et en particulier selon chaque composé métallique concerné.

Les ligands PEG tels que les amines et les acides carboxyliques présentant au moins un groupement dérivé de l'oxyéthylène, et plus particulièrement au moins un groupement polyoxyéthylène (lesdits ligands PEG étant dérivés de l'éthylèneglycol, et plus particulièrement du poly(éthylèneglycol) PEG), sont solubles dans la plupart des solvants organiques et dans l'eau. Ainsi, de tels ligands sont d'une part solubles à la fois dans ledit milieu solvant et dans les milieux aqueux, et d'autre part, de façon totalement inattendue et contrairement à tous les préjugés, malgré leur caractère très hydrophile donc nécessairement hydraté dans une proportion importante et incontrôlée, s'avèrent être compatibles avec l'obtention des nanocristaux métalliques dans des conditions quasiment identiques aux ligands amines aliphatiques et acides carboxyliques aliphatiques (dotés de chaînes alkyles aliphatiques hydrocarbonées) traditionnellement utilisés.

Ainsi, les inventeurs ont pu déterminer que tous les efforts entrepris jusqu'à maintenant pour remplacer les ligands hydrophobes, ou les fonctionnaliser ou les encapsuler dans des tensioactifs, sont en réalité inutiles. En effet, le procédé de préparation peut être mis en oeuvre par contact direct à partir d'au moins un précurseur organométallique en solution liquide dans un milieu solvant avec au moins un ligand PEG, et notamment un ligand amino/carboxy PEG, apte à être soluble à la fois dans ledit milieu solvant, et dans l'eau et les milieux aqueux.

Ainsi, avantageusement et selon l'invention on choisit au moins un ligand PEG, dit ligand amino/carboxy PEG, dans le groupe des amines et des acides carboxyliques comprenant au moins une chaîne carbonée présentant au moins un groupement [OCH₂CH₂]ₙ, n étant un nombre entier supérieur à 1, et solubles dans l'eau. Plus particulièrement, avantageusement et selon l'invention, on choisit au moins un ligand amino/carboxylique PEG parmi les α-amino-poly(éthylèneglycol), les bis-amino-poly(éthylèneglycol), les α-carboxyl-poly(éthylèneglycol), les bis-carboxyl-poly(éthylèneglycol), et les α-amino-ω-carboxyl-poly(éthylèneglycol).

Un tel ligand amino/carboxy PEG utilisé dans un procédé selon l'invention est un dérivé de l'éthylèneglycol ou d'un PEG dont au moins une extrémité est fonctionnalisée par un groupement choisi parmi une amine primaire - RNH₂ et un groupement carboxylique -R'COOH, c'est-à-dire dont la formule générale (I) est la suivante :

R¹ [OCH₂CH₂]ₙOR² (I)

dans laquelle ;
- R¹ est choisi parmi une amine primaire -R³NH₂, un groupement carboxylique -R⁴COOH, un groupement thiol -R⁵SH, un groupement phosphine -R⁶P(Ph)₂, Ph représentant le phényle, un groupement phosphonate choisi parmi -PO(OR⁷)(OR⁸), -PO(O⁻)₂, et -PO(O⁻)(OH) ; R³, R⁴, R⁵, R⁶ représentant un groupement comprenant au moins une chaîne aliphatique, R⁷ et R⁸ étant choisis parmi un atome d'hydrogène et un groupement comprenant au moins une chaîne aliphatique,
- R² est choisi parmi un atome d'hydrogène, un groupement alkyle, une chaîne grasse non ramifiée, une amine primaire -R³NH₂, un groupement carboxylique -R⁴COOH, un groupement thiol -R⁵SH, un groupement phosphine -R⁶P(Ph)₂, Ph représentant le phényle, un groupement phosphonate choisi parmi -PO(OR⁷)(OR⁸), -PO(O⁻)₂, et -PO(O⁻)(OH) ; R³, R⁴, R⁵, R⁶ représentant un groupement comprenant au moins une chaîne aliphatique, R⁷ et R⁸ étant choisis parmi un atome d'hydrogène et un groupement comprenant au moins une chaîne aliphatique,
- n est un nombre entier supérieur à 1.

Par ailleurs, avantageusement et selon l'invention, chaque ligand PEG utilisé présente une masse molaire moyenne comprise entre 300 g.mol⁻¹ et 20 000 g.mol⁻¹ -notamment entre 750 g.mol⁻¹ et 3000 g.mol⁻¹-.

Par exemple, avantageusement et selon l'invention on utilise au moins un ligand amino/carboxylique PEG choisi dans le groupe comprenant :
- le poly(éthylèneglycol) bis(3-propylamine) de formule H₂NC₃H₆[OCH₂CH₂]ₙOC₃H₆NH₂, et ayant une masse molaire de l'ordre de 1500 g.mol⁻¹,
- le α-(2-éthylamine)-méthoxy(éthylèneglycol) de formule H₃C[OCH₂CH₂]ₙOC₂H₄NH₂, et ayant une masse molaire de l'ordre de 750 g.mol⁻¹,
- le méthyléther-poly(éthylèneglycol)oïque de formule H₃C[OCH₂CH₂]ₙO-CH₂-COOH, et ayant une masse molaire de l'ordre de 3000 g.mol⁻¹.

De préférence, dans un procédé selon l'invention, on utilise une quantité de ligand(s) PEG comprise entre 0,1 et 1 fois une quantité équimolaire à celle des atomes de métal du(des) précurseur(s).

Avantageusement et selon l'invention, on choisit au moins un ligand non volatil à la température réactionnelle, faisant office de dispersant de la composition produite dans le milieu solvant. Ainsi, les nanocristaux métalliques se trouvent spontanément à l'état dispersé (colloïde) dans la composition finale.

Dans un procédé selon l'invention, on choisit et on adapte les conditions réactionnelles de façon à obtenir la formation des nanocristaux. Les conditions réactionnelles choisies comprennent notamment :
- le choix du milieu solvant ;
- le choix du(des) ligand(s) ;
- les concentrations initiales ;
- la température réactionnelle ;
- la pression réactionnelle,
- le choix du réducteur.

Le procédé de l'invention consiste ainsi à réaliser une réaction chimique de réduction et décomposition directe d'au moins un précurseur organométallique en solution liquide.

Avantageusement et selon l'invention, on choisit au moins une base et au moins un acide à titre de ligands PEG. Avantageusement et selon l'invention, on utilise au moins une amine à titre de base, notamment une amine primaire telle que mentionnée ci-dessus, et au moins un acide carboxylique.

Dans un procédé sur l'invention, ledit milieu solvant comprend au moins un solvant qui est choisi de façon à permettre d'une part la dissolution de chaque précurseur organométallique, d'autre part celle de chaque ligand PEG utilisé, et le déroulement de la réaction de réduction pour l'obtention des nanocristaux métalliques au moins initialement non oxydés. Avantageusement et selon l'invention ledit milieu solvant comprend un solvant choisi parmi le THF, le toluène, l'anisole, et le mésithylène (1, 3, 5-triméthyle benzène).

Dans un mode particulier de réalisation de l'invention, les nanocristaux métalliques obtenus sont précipités, par exemple par addition de pentane au milieu solvant, de sorte que les nanocristaux métalliques obtenus se présentent, en fin de réaction, sous la forme d'une poudre.

De plus, les inventeurs ont constaté que ledit milieu solvant et sa structure permettent de contrôler la taille, la forme et la distribution en taille des nanocristaux.

Par ailleurs, avantageusement et selon l'invention on réalise la production des nanocristaux (réaction de réduction) à une température comprise entre 0°C et 300°C -notamment à température ambiante-. Dans la majorité des cas, on peut réaliser la réduction à une température inférieure à 50°C -notamment à température ambiante-. Ainsi, le procédé selon l'invention est d'une extrême simplicité.

Avantageusement et selon l'invention, on choisit chaque précurseur de telle sorte que chaque résidu formé à partir de ce précurseur soit volatil dans les conditions réactionnelles. Ainsi, dans un procédé selon l'invention, la réaction de réduction ne produit que des nanocristaux métalliques solides et un(des) résidu(s) organique(s) volatil(s). Avec un milieu solvant volatil, et lorsque le(les) résidu(s) de la réaction de réduction est(sont) volatil(s), la composition résultant de la réaction de réduction est solide. Elle peut être reprise dans un autre milieu solvant, y compris aqueux, et forme alors une solution colloïdale liquide. Cela étant, en variante rien n'empêche de choisir un précurseur dont les résidus de réaction ne sont pas volatils dans les conditions réactionnelles.

Compte tenu de ce qui précède, le procédé selon l'invention peut être mis en oeuvre avec tous les éléments pour lesquels il existe un précurseur organométallique spontanément réactif à la réaction de réduction et pouvant être placé en solution liquide dans un milieu solvant compatible avec la solubilisation, en quantité suffisante, d'au moins un ligand PEG.

Parmi ces éléments, on peut citer : l'or, l'argent, le platine, le rhodium, le fer, le cobalt, le cuivre, le nickel, le zinc, l'étain, le titane, le manganèse, le chrome, le vanadium, l'indium, le ruthénium, le palladium, le molybdène, le niobium, le zirconium, le tantale, l'aluminium, le gallium, le tungstène, le rhénium, l'osmium, l'iridium.

A titre d'exemples de précurseurs organométalliques spontanément réactifs à la réaction de réduction pouvant être utilisés dans un procédé selon l'invention, on peut citer les composés complexes de coordination comprenant au moins l'un des éléments suscités et au moins un groupement choisi parmi : les amidures, les alkyles, les aryles, les cyclopentadienyles, les oléfines, les polyoléfines, les alcynes, les alcynines, les silyles.

Avantageusement et selon l'invention, on utilise au moins un réducteur choisi parmi le dihydrogène et l'oxyde de carbone. Le réducteur peut être un gaz utilisé sous la forme d'un barbotage ou d'un bullage dans la solution liquide, ou d'une atmosphère dudit gaz sous pression -notamment par exemple de l'ordre de 3.10⁵ Pa- surmontant la solution liquide, avec agitation de cette dernière.

L'invention permet d'obtenir une composition hydrocompatible et organocompatible de nanocristaux métalliques se présentant sous forme d'une poudre ou d'une solution colloïdale, et ayant des formes et des dimensions correspondant à une distribution unimodale. Les nanocristaux métalliques obtenus sont initialement à l'état non oxydé. Lorsque les nanocristaux métalliques sont formés d'au moins un métal oxydable et sont mis ultérieurement au contact d'un oxydant tel que l'air atmosphérique ou un milieu aqueux de reprise, les nanocristaux sont oxydés au moins partiellement, en surface ou même à coeur. Lorsque les nanocristaux métalliques sont formés uniquement d'au moins un métal non oxydable, ou lorsqu'ils sont laissés en milieu non oxydant, ils restent à l'état non oxydé.

Avec un procédé selon l'invention il est possible d'obtenir de façon sélective, reproductible et quantitative, des nanocristaux métalliques cristallins parfaitement dispersés (non agglomérés), organocompatibles et hydrocompatibles, et ayant des formes et dimensions au moins sensiblement uniformes, c'est-à-dire selon une distribution unimodale, notamment sensiblement homogène (faible dispersion), et pouvant même être monodisperses.

Avantageusement et selon l'invention, on choisit chaque précurseur organométallique, le milieu solvant et chaque ligand de façon à obtenir une composition hydrocompatible de nanocristaux métalliques présentant au moins une dimension (largeur s'il s'agit de nanoparticules allongées ; épaisseur s'il s'agit de nanoparticules en forme de feuilles ; diamètre moyen s'il s'agit de nanoparticules globalement sphériques) comprise entre 1 nm et 5 nm.

L'invention s'étend à une composition obtenue par un procédé selon l'invention. Ainsi, l'invention concerne une composition de nanoparticules métalliques à l'état cristallin, dites nanocristaux métalliques, caractérisée en ce qu'elle comprend au moins un ligand, dit ligand PEG, choisi dans le groupe des composés organiques solubles dans l'eau comprenant au moins une chaîne carbonée:
- comprenant au moins un groupement polyoxyéthylène [-OCH₂CH₂]ₙ, n étant un entier supérieur à 1,
   - dont au moins une extrémité est fonctionnalisée par un groupement de coordination choisi parmi une amine primaire -R³NH₂, un groupement carboxylique -R⁴COOH, un groupement thiol -R⁵SH, un groupement phosphine -R⁶P(Ph)₂, Ph représentant le phényle, un groupement phosphonate choisi parmi -PO(OR⁷)(OR⁸), -PO(O⁻)₂, et -PO(O⁻)(OH) ; R³, R⁴, R⁵, R⁶ représentant un groupement comprenant au moins une chaîne aliphatique, R⁷ et R⁸ étant choisis parmi un atome d'hydrogène et un groupement comprenant au moins une chaîne aliphatique,
   de sorte que cette composition de nanocristaux -notamment de nanocristaux métalliques non oxydés- est hydrocompatible et organocompatible.

Ledit groupement polyoxyéthylène d'un ligand PEG d'une composition selon l'invention, est un groupement linéaire non ramifié. De préférence, ladite chaîne carbonée est également une chaîne linéaire non ramifiée. Quoi qu'il en soit, ladite chaîne carbonée présente une chaîne principale linéaire incorporant au moins un groupement polyoxyéthylène tel que mentionné ci-dessus.

Dans une composition sur l'invention, les molécules de ligand PEG sont en interaction directe avec la surface des nanocristaux métalliques, c'est-à-dire sont liées à des atomes métalliques et/ou à des atomes d'oxygène (dans le cas où les nanocristaux sont au moins partiellement oxydés). Plus précisément, au moins un groupement de coordination d'extrémité de chaque molécule de ligand PEG est lié (par une liaison de coordination, c'est-à-dire en particulier à l'exclusion d'une liaison par interactions faibles de type Van der Waals, qui n'est pas une liaison de coordination au sens de l'invention) à au moins un tel atome métallique et/ou d'oxygène des nanocristaux métalliques.

En outre, avantageusement une composition selon l'invention est aussi caractérisée en ce que chaque ligand PEG est conforme à tout ou partie des caractéristiques mentionnées ci-dessus en référence au procédé selon l'invention.

Avantageusement une composition selon l'invention est une dispersion des nanocristaux métalliques qui se présente sous forme d'une solution colloïdale aqueuse.

Dans une composition selon l'invention, les nanocristaux métalliques comprennent au moins un métal à l'état cristallin choisi parmi l'or, l'argent, le platine, le rhodium, le fer, le cobalt, le cuivre, le nickel, le zinc, l'étain, le titane, le manganèse, le chrome, le vanadium, l'indium, le ruthénium, le palladium, le molybdène, le niobium, le zirconium, le tantale, l'aluminium, le gallium, le tungstène, le rhénium, l'osmium, l'iridium.

Avantageusement et selon l'invention, les nanocristaux métalliques présentent une anisotropie de forme (ils ne sont pas sphériques). Avantageusement et selon l'invention, les nanocristaux métalliques ont une forme allongée avec une largeur moyenne inférieure à 50 nm et une longueur moyenne supérieure à deux fois la largeur moyenne. Avantageusement et selon l'invention, les nanocristaux métalliques présentent une largeur moyenne comprise entre 1 nm et 5 nm et une longueur moyenne comprise entre 10 nm et 50 nm.

En variante, avantageusement et selon l'invention, les nanocristaux métalliques présentent une isotropie de forme, c'est-à-dire sont globalement sphériques, et présentent une dimension moyenne comprise entre 1 nm et 5 nm.

En outre, les nanocristaux métalliques peuvent comprendre au moins un métal oxydable et être au moins partiellement oxydés. En variante, les nanocristaux métalliques peuvent comprendre uniquement au moins un métal non oxydable, par exemple un métal noble. Dans une composition selon cette variante de l'invention, les nanocristaux métalliques sont des nanocristaux métalliques non oxydés. Dans une composition selon l'invention, les nanocristaux métalliques peuvent être formés d'un seul métal, ou au contraire d'une pluralité de métaux. Pour obtenir des nanocristaux métalliques comprenant une pluralité de métaux, il suffit d'utiliser simultanément dans la solution liquide de départ une pluralité de précurseurs organométalliques correspondants.

L'invention concerne en outre un procédé et une composition caractérisés en combinaison par tout ou partie des caractéristiques mentionnées ci-dessus ou ci-après.

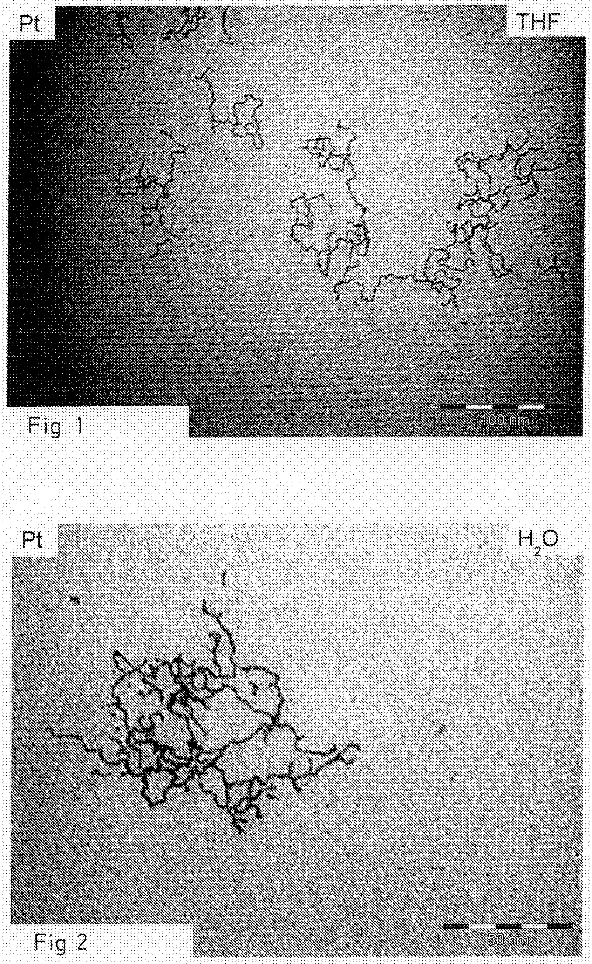

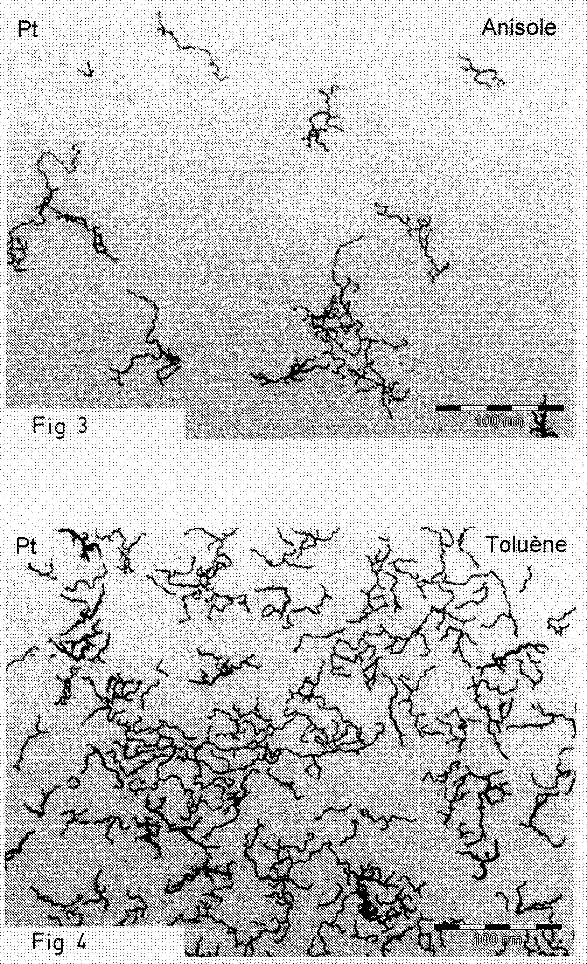

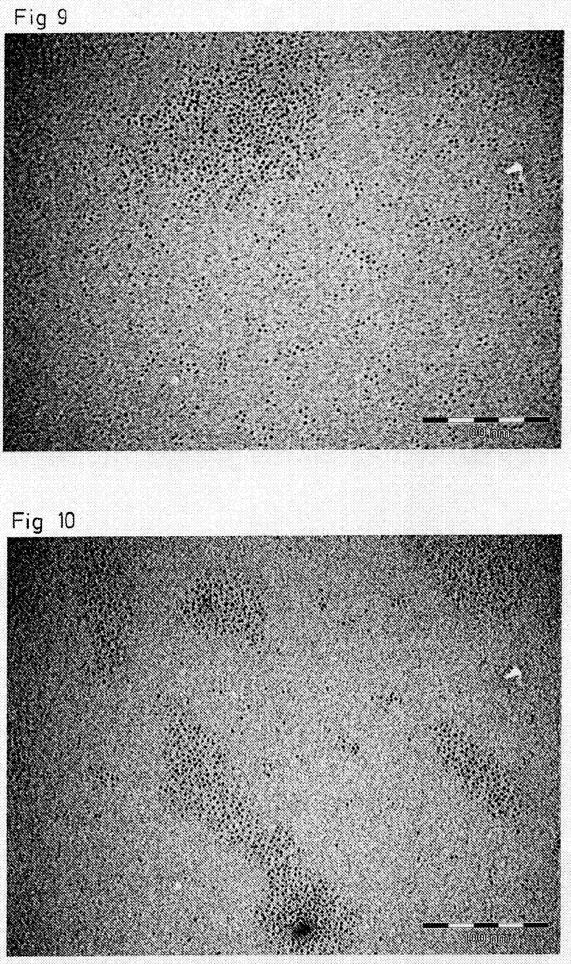

D'autres buts, caractéristiques et avantages de l'invention apparaissent à la lecture des exemples suivants et des figures 1 à 17 annexées qui représentent des vues microscopiques et des spectres RMN de compositions selon l'invention obtenues dans les exemples.

### Protocole général :

Le protocole expérimental général utilisé dans les exemples est celui décrit dans FR 2678855, la matrice cellulosique étant remplacée par les ligands conformément à l'invention.

Le(s) précurseur(s) organométallique(s) est(sont) placé(s) dans une bouteille de type Fisher-Porter sous atmosphère d'argon, puis refroidi à - 120 °C à l'aide d'un bain d'éthanol refroidi à l'azote liquide. Une solution liquide du(des) ligand(s) PEG dans un volume de milieu solvant préalablement séché (de sorte qu'une quantité maximum d'eau de l'ordre de 20 ppm (mesurée par titration Karl-Fisher) est présente dans ledit milieu solvant) et dégazé est préparée sous atmosphère d'argon dans un tube de Schlenk. Cette solution de ligand(s) est soumise aux ultrasons pendant 30 minutes pour obtenir une solution transparente. Elle est ensuite transférée dans la bouteille de type Fisher-Porter à l'aide d'une canule. La solution liquide est laissée au repos jusqu'à ce que chaque précurseur organométallique se dissolve et que la température revienne à la température de la pièce. Ensuite, une pression de 3.10⁵ Pa de dihydrogène est introduite au-dessus de la solution pendant 20 minutes tandis que la solution est placée sous agitation magnétique.

On obtient une solution qui change de couleur et prend la couleur du métal considéré, noire par exemple dans le cas du platine et du ruthénium. On laisse réagir le mélange à une température adaptée pendant une durée d par exemple de 24h à 48h avec agitation toujours sous atmosphère pressurisée de dihydrogène. Au bout de ce temps d'attente d, l'atmosphère d'hydrogène est enlevée et la solution est concentrée à l'aide de la ligne sous vide. Un volume V, par exemple 30 mL, de pentane est ajouté de façon à précipiter les nanocristaux sous forme d'une poudre solide ayant la couleur du métal. Ce solide est lavé trois fois dans le pentane. La poudre solide métallique est séchée et stockée sous atmosphère contrôlée. Elle peut ensuite être utilisée pour former des solutions colloïdales stables dans de très nombreux solvants différents, aussi bien en milieu organique qu'en milieu aqueux ou alcoolique. Lorsque le milieu solvant est oxydant, et selon la nature du métal, les nanocristaux métalliques peuvent éventuellement subir une oxydation au moins en surface, la solution colloïdale pouvant prendre la couleur de l'oxyde métallique correspondant.

Dans tous les exemples, des solutions colloïdales ont pu être obtenues aussi bien dans les solvants organiques qu'en milieux aqueux, dont la couleur correspond à celle du métal ou de l'oxyde correspondant. La présence du (des) ligand(s) PEG introduit(s) dans le milieu réactionnel a été constatée. Les nanocristaux métalliques forment des entités se comportant comme tout produit chimique classique et possèdent par exemple une concentration à saturation pour laquelle l'on passe d'une solution colloïdale à une suspension turbide. Cette concentration est intrinsèque à chaque système. Dans le cas des solutions liquides colloïdales, la diffraction électronique des échantillons déposés sur grille de microscopie, permet de vérifier la cristallinité des nanocristaux. Ces grilles de microscopie sont préparées en déposant une goutte de la solution liquide colloïdale sur la grille. Dans tous les exemples, des nanocristaux ont été obtenus et des solutions liquides colloïdales ont pu être obtenues aussi bien dans différents milieux solvants organiques que dans l'eau. L'utilisation de la microscopie électronique à transmission, TEM, permet également d'observer la taille, la forme et l'homogénéité des nanocristaux formés.

Dans toute la suite, et sur les figures, les abréviations suivantes sont utilisées :
- BisAmPEG1500: le poly(éthylèneglycol) bis(3-propylamine) de formule H₂NC₃H₆[OCH₂CH₂]ₙOC₃H₆NH₂, et ayant une masse molaire de l'ordre de 1500 g.mol⁻¹,
- MonoAmPEG750: le α-(2-éthylamine)-poly(éthylèneglycol) de formule H₃C[OCH₂CH₂]ₙOC₂H₄NH₂, et ayant une masse molaire moyenne de l'ordre de 750 g.mol⁻¹,
- MonoAcPEG3000: le méthyléther-poly(éthylèneglycol)oïque de formule H₃C[OCH₂CH₂]ₙO-CH₂-COOH, et ayant une masse molaire de l'ordre de 3000 g.mol⁻¹,
- Pt(dba)₂: le bis-dibenzylidène acétone de platine de formule Pt[CO(C₆H₅C₂H₂)₂]₂,
- Ru(COD)(COT): le (1,5-cyclooctadiène) (1,3,5-cyclooctatriène) de ruthénium de formule Ru(C₈H₁₂) (C₈H₁₀),
- Pd₂(dba)₃: le tri-dibenzylidène acétone de palladium de formule Pd₂[CO(C₆H₅C₂H₂)₂]₃,
- Fe(TMSA) : le bis-bis-triméthyl-silylamidure de fer Fe[N(Si(CH₃)₃)₂]₂.

### EXEMPLE 1 :

Dans cet exemple, on prépare des nanocristaux de platine selon le protocole mentionné ci-dessus en utilisant 20 mg (0,03 mmol) de précurseur organométallique de platine Pt(dba)₂, et, à titre de ligands PEG, 18,1 mg (0,006 mmol) de monoAcPEG3000 et 9,1 mg (0,012 mmol) de monoAmPEG750 dissous dans 20 mL de THF préalablement déshydraté et dégazé.

Les figures 1 à 4 sont des vues de microscopie électronique en transmission des solutions colloïdales obtenues respectivement dans le THF, dans l'eau, dans l'anisole, et dans le toluène.

Les nanocristaux obtenus se présentent sous forme de nanofils ou nanobâtonnets allongés dont les dimensions moyennes sont les suivantes : épaisseur de l'ordre de 1 nm ; longueur typiquement supérieure à 30 nm.

Les analyses aux rayons X qui ont été effectuées, montrent qu'il s'agit bien de nanocristaux de platine non oxydés.

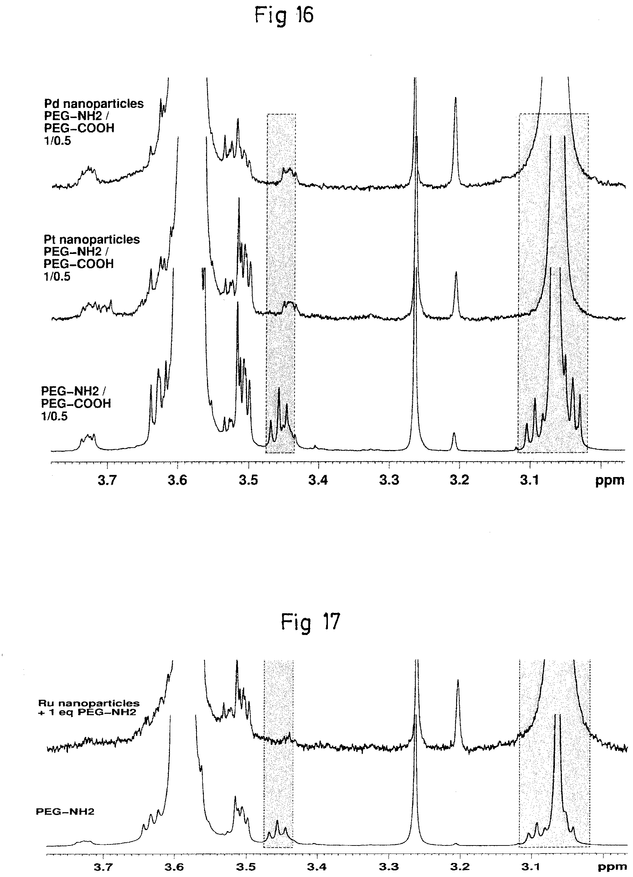

La figure 16 donne (courbe du milieu) un spectre obtenu en RMN (résonance magnétique nucléaire) caractéristique de la coordination directe du ligand monoAmPEG750, via le groupement de coordination amine, avec la surface des nanocristaux de platine.

### EXEMPLE 2 :

Dans cet exemple, on prépare des nanocristaux de ruthénium selon le protocole mentionné ci-dessus en utilisant 20 mg (0,06 mmol) de précurseur organométallique de ruthénium Ru(COD)(COT), et, à titre de ligands PEG, 38 mg (0,012 mmol) de monoAcPEG3000 et 19 mg (0,024 mmol) de monoAmPEG750 dissous dans 20 mL de THF préalablement déshydraté et dégazé.

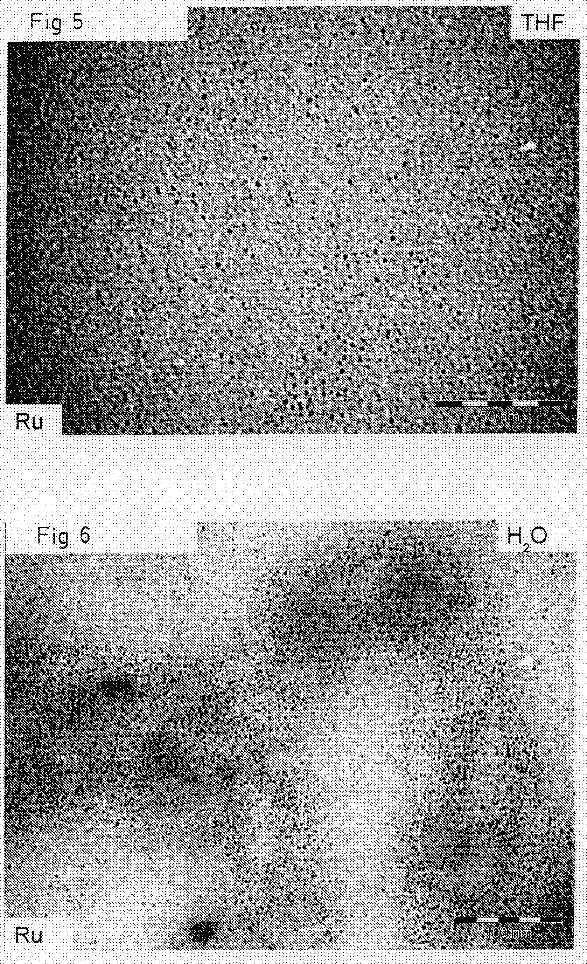

Les figures 5 et 6 sont des vues de microscopie électronique en transmission des solutions colloïdales obtenues respectivement dans le THF et dans l'eau. D'autres solutions colloïdales ont pu être obtenues, notamment dans l'anisole.

Les nanocristaux obtenus se présentent sous forme de nanoparticules globalement sphériques (dimensions isotropes) dont la dimension moyenne est la suivante: 1,1 ± 0,3 nm.

Les analyses aux rayons X qui ont été effectuées, montrent qu'il s'agit bien de nanocristaux de ruthénium non oxydés.

### EXEMPLE 3 :

Dans cet exemple, on prépare des nanocristaux de ruthénium en utilisant 50 mg (0,146 mmol) de précurseur organométallique de ruthénium Ru(COD)(COT), et, à titre de ligand PEG, 120 mg (0,08 mmol) de bisAmPEG1500 dissous dans 50 mL de THF préalablement déshydraté et dégazé. Après réaction, les nanocristaux sont précipités par 50 mL de pentane.

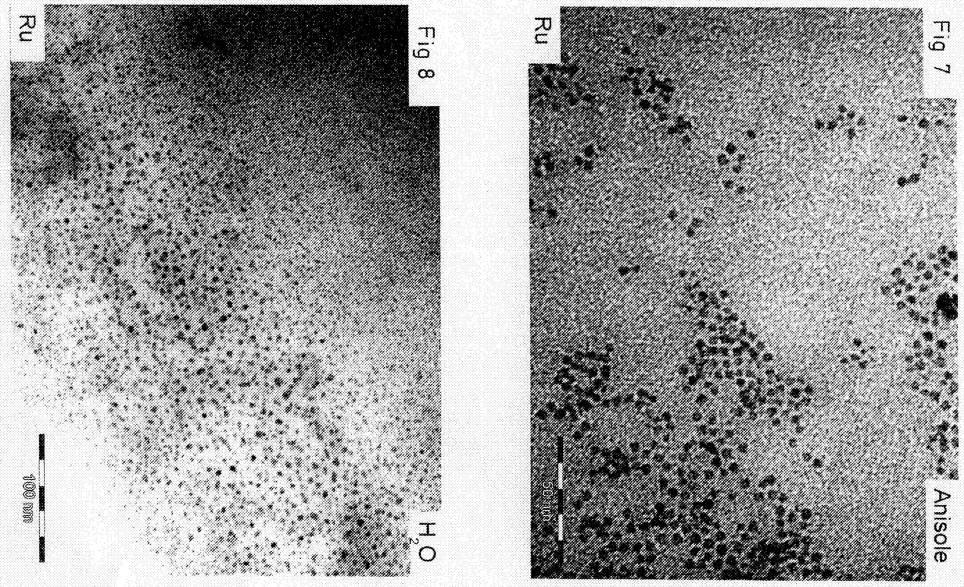

Les figures 7 et 8 sont des vues de microscopie électronique en transmission des solutions colloïdales obtenues respectivement dans l'anisole et dans l'eau.

Les nanocristaux obtenus se présentent sous forme de nanoparticules globalement sphériques (dimensions isotropes) dont la dimension moyenne est la suivante: 3,1 ± 0,8 nm.

Les analyses aux rayons X qui ont été effectuées, montrent qu'il s'agit bien de nanocristaux de ruthénium non oxydés.

### EXEMPLE 4 :

Dans cet exemple, on prépare des nanocristaux de ruthénium en utilisant 20 mg (0,06 mmol) de précurseur organométallique de ruthénium Ru(COD)(COT), et, à titre de ligand PEG, 47,5 mg (0,06 mmol) de monoAmPEG750 dissous dans 20 mL de THF préalablement déshydraté et dégazé. Après réaction, les nanocristaux sont précipités par 30 mL de pentane.

Les figures 9 et 10 sont des vues de microscopie électronique en transmission des solutions colloïdales obtenues respectivement dans le THF et dans l'eau. D'autres solutions colloïdales ont été obtenues, notamment dans l'anisole et dans le toluène.

Les nanocristaux obtenus se présentent sous forme de nanoparticules globalement sphériques (dimensions isotropes) dont la dimension moyenne est la suivante: 1,1 ± 0,3 nm.

Les analyses aux rayons X qui ont été effectuées, montrent qu'il s'agit bien de nanocristaux de ruthénium non oxydés.

La figure 17 est un spectre obtenu en RMN (résonance magnétique nucléaire) caractéristique de la coordination directe du ligand monoAmPEG750, via le groupement de coordination amine, avec la surface des nanocristaux de ruthénium.

### EXEMPLE 5 :

Dans cet exemple, on prépare des nanocristaux de palladium en utilisant 20 mg (0,022 mmol) de précurseur organométallique de palladium Pd₂(dba)₃, et, à titre de ligands PEG, 52,4 mg (0,017 mmol) de monoAcPEG3000 et 26,2 mg (0,035 mmol) de monoAmPEG750 dissous dans 40 mL de THF préalablement déshydraté et dégazé. Après réaction, on obtient une solution noire, et les nanocristaux (solide blanc) sont précipités par 50 mL de pentane et lavés avec 3x30 ml de pentane et séchés sous vide.

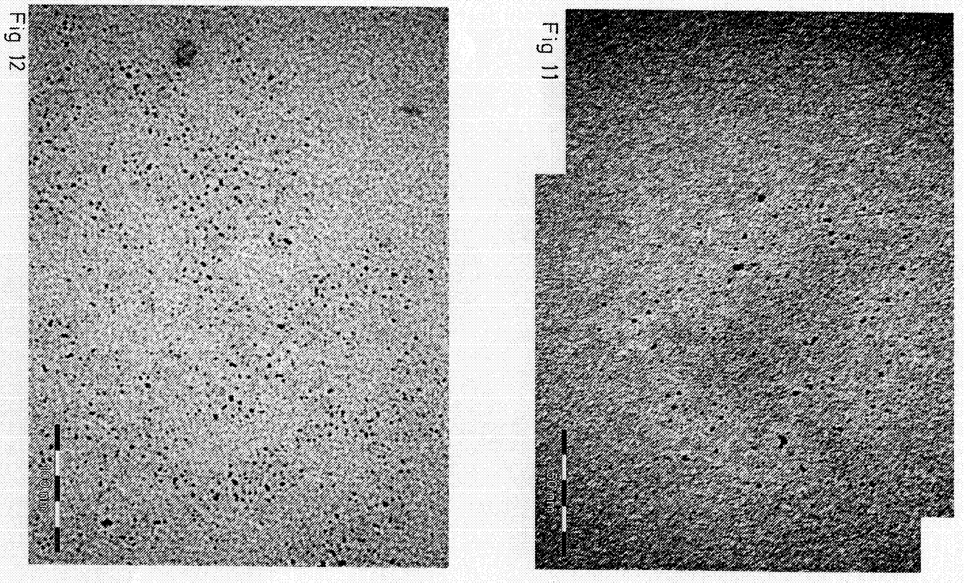

Les figures 11 et 12 sont des vues de microscopie électronique en transmission des solutions colloïdales obtenues respectivement dans le THF et dans l'eau. D'autres solutions colloïdales ont été obtenues, notamment dans l'anisole et dans le toluène.

Les nanocristaux obtenus se présentent sous forme de nanoparticules globalement sphériques (dimensions isotropes) dont la dimension moyenne est la suivante: 1,7 ± 0,6 nm.

Les analyses aux rayons X qui ont été effectuées, montrent qu'il s'agit bien de nanocristaux de ruthénium non oxydés.

La figure 16 donne (courbe du haut) un spectre obtenu en RMN (résonance magnétique nucléaire) caractéristique de la coordination directe du ligand monoAmPEG750, via le groupement de coordination amine, avec la surface des nanocristaux de palladium.

### EXEMPLE 6:

Dans cet exemple, on prépare des nanocristaux de fer en utilisant 100 mg (0,26 mmol) de précurseur organométallique de fer Fe(TMSA) dissous dans 5 ml de mésithylène préalablement séché et dégazé, et, à titre de ligands PEG, 199,1 mg (0,065 mmol) de monoAcPEG3000 et 99,6 mg (0,13 mmol) de monoAmPEG750 dissous dans 25 mL de mésithylène préalablement déshydraté et dégazé. Le mélange réactionnel est chauffé à 150 °C et maintenu à cette température et sous agitation magnétique pendant 48 heures. Après réaction, un précipité noir de nanocristaux est observé sur l'agitateur magnétique. La solution est filtrée et le solide de couleur blanc/brun est séché.

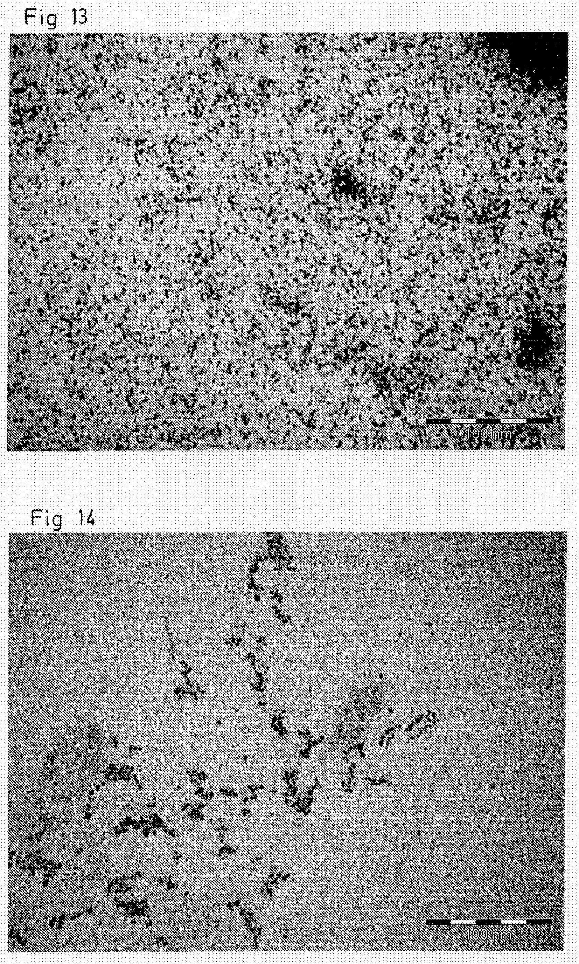

Les figures 13 et 14 sont des vues de microscopie électronique en transmission des solutions colloïdales obtenues respectivement dans le THF et dans l'eau. D'autres solutions colloïdales ont été obtenues, notamment dans l'anisole et dans le toluène.

Les nanocristaux obtenus se présentent sous forme de nanoparticules globalement sphériques (dimensions isotropes) dont la dimension moyenne est la suivante: 1,3 ± 0,6 nm.

Les analyses aux rayons X qui ont été effectuées, montrent qu'il s'agit bien de nanocristaux de fer non oxydés et le toluène.

### EXEMPLE 7 :

Dans cet exemple, on prépare des nanocristaux de fer en utilisant 50 mg (0,13 mmol) de précurseur organométallique de fer Fe(TMSA) dissous dans 5 ml de mésithylène préalablement séché et dégazé, et, à titre de ligand PEG, 99,6 mg (0,13 mmol) de monoAmPEG750 dissous dans 15 mL de mésithylène préalablement déshydraté et dégazé. Le mélange réactionnel est chauffé à 150 °C et maintenu à cette température et sous agitation magnétique pendant 48 heures. Après réaction, on obtient une solution noire, et les nanocristaux (solide noir) sont précipités par 50 mL de pentane puis lavés (3x30 ml pentane) et séchés sous vide.

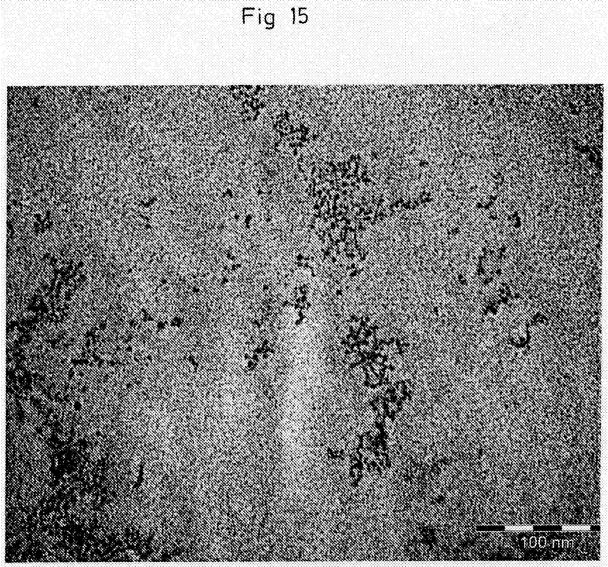

La figure 15 est une vue de microscopie électronique en transmission d'une solution colloïdale obtenue dans l'eau. D'autres solutions colloïdales ont été obtenues, notamment dans l'anisole et dans le toluène.

Les nanocristaux obtenus se présentent sous forme de nanoparticules globalement sphériques (dimensions isotropes) dont la dimension moyenne est la suivante: 1,4 ± 0,4 nm.

Les analyses aux rayons X qui ont été effectuées, montrent qu'il s'agit bien de nanocristaux de fer non oxydés.

## Revendications

1. - Procédé de préparation d'une composition de nanoparticules métalliques à l'état cristallin, dites nanocristaux métalliques, à partir d'au moins un précurseur organométallique dans lequel :
- on réalise une solution liquide d'au moins un précurseur organométallique, dans un milieu solvant en présence d'au moins un composé, dit ligand, présentant au moins une chaîne carbonée dont au moins une extrémité est fonctionnalisée par un groupement de coordination comprenant au moins un hétéroatome, et soluble dans ledit milieu solvant,
- on fait agir, sur cette solution liquide, au moins un réducteur à l'égard de chaque précurseur organométallique dans des conditions réactionnelles adaptées pour entraîner directement la formation des nanocristaux métalliques,
**caractérisé en ce qu'**on choisit :
- au moins un ligand, dit ligand PEG, dans le groupe des ligands organiques solubles dans l'eau comprenant au moins une chaîne carbonée présentant au moins un groupement polyoxyéthylène [-OCH₂CH₂]ₙ, n étant un entier supérieur à 1, et dont au moins une extrémité est fonctionnalisée par un groupement de coordination choisi parmi une amine primaire -R³NH₂, un groupement carboxylique -R⁴COOH, un groupement thiol -R⁵SH, un groupement phosphine -R⁶P(Ph)₂, Ph représentant le phényle, un groupement phosphonate choisi parmi -PO(OR⁷)(OR⁸), -PO(O⁻)₂, et -PO(O⁻)(OH) ; R³, R⁴, R⁵, R⁶ représentant un groupement comprenant au moins une chaîne aliphatique, R⁷ et R⁸ étant choisis parmi un atome d'hydrogène et un groupement comprenant au moins une chaîne aliphatique,
- ledit milieu solvant de façon que chaque ligand PEG soit soluble dans ce milieu solvant,
et de façon à obtenir directement en une étape une composition hydrocompatible et organocompatible de nanocristaux métalliques.

2. - Procédé selon la revendication 1, **caractérisé en ce qu'**on utilise au moins un ligand PEG répondant à la formule générale (I) suivante :
R¹[OCH₂CH₂]ₙOR² (I)
dans laquelle ;
- R¹ est choisi parmi un groupement amine primaire - R³NH₂, un groupement carboxylique -R⁴COOH, un groupement thiol -R⁵SH, un groupement phosphine -R⁶P(Ph)₂, Ph représentant le phényle, un groupement phosphonate choisi parmi -PO(OR⁷)(OR⁸), -PO(O⁻)₂, et -PO(O⁻)(OH) ; R³, R⁴, R⁵, R⁶ représentant un groupement comprenant au moins une chaîne aliphatique, R⁷ et R⁸ étant choisis parmi un atome d'hydrogène et un groupement comprenant au moins une chaîne aliphatique,
- R² est choisi parmi un atome d'hydrogène, un groupement alkyle, une chaîne grasse non ramifiée, un groupement amine primaire -R³NH₂, un groupement carboxylique -R⁴COOH, un groupement thiol -R⁵SH, un groupement phosphine -R⁶P(Ph)₂, Ph représentant le phényle, un groupement phosphonate choisi parmi -PO(OR⁷)(OR⁸), -PO(O⁻)₂, et -PO(O⁻)(OH) ; R³, R⁴, R⁵, R⁶ représentant un groupement comprenant au moins une chaîne aliphatique, R⁷ et R⁸ étant choisis parmi un atome d'hydrogène et un groupement comprenant au moins une chaîne aliphatique,
- n est un nombre entier supérieur à 1.

3. - Procédé selon l'une des revendications 1 ou 2, **caractérisé en ce que** chaque ligand PEG présente une masse molaire moyenne comprise entre 300 g.mol⁻¹ et 20 000 g.mol⁻¹-notamment entre 750 g.mol⁻¹ et 3000 g.mol⁻¹-.

4. - Procédé selon l'une des revendications 1 à 3, **caractérisé en ce qu'**on choisit au moins un ligand PEG, dit ligand amino/carboxy PEG, dans le groupe des amines et des acides carboxyliques comprenant au moins une chaîne carbonée présentant au moins un groupement [OCH₂CH₂]ₙ, n étant un entier supérieur à 1, et solubles dans l'eau.

5. - Procédé selon la revendication 4, **caractérisé en ce qu'**on choisit au moins un ligand amino/carboxylique PEG parmi les α-amino-poly(éthylèneglycol), les bis-amino-poly(éthylèneglycol), les α-carboxyl-poly(éthylèneglycol), les bis-carboxyl-poly(éthylèneglycol), et les α-amino-ω-carboxyl-poly(éthylèneglycol).

6. - Procédé selon l'une des revendications 1 à 5, **caractérisé en ce qu'**on utilise au moins un ligand amino/carboxylique PEG choisi dans le groupe comprenant :
- le poly(éthylèneglycol) bis(3-propylamine) de formule H₂NC₃H₆[OCH₂CH₂]ₙOC₃H₆NH₂, et ayant une masse molaire de l'ordre de 1500 g.mol⁻¹,
- le α-(2-éthylamine)-méthoxy(éthylèneglycol) de formule H₃C[OCH₂CH₂]ₙOC₂H₄NH₂, et ayant une masse molaire de l'ordre de 750 g.mol⁻¹,
- le méthyléther-poly(éthylèneglycol)oïque de formule H₃C[OCH₂CH₂]ₙO-CH₂-COOH, et ayant une masse molaire de l'ordre de 3000 g.mol⁻¹.

7. - Procédé selon l'une des revendications 1 à 6, **caractérisé en ce que** ledit milieu solvant comprend un solvant choisi parmi le THF, le toluène, l'anisole, et le mésithylène.

8. - Procédé selon l'une des revendications 1 à 7, **caractérisé en ce qu'**on réalise la production des nanocristaux à une température comprise entre 0°C et 300°C -notamment à température ambiante-.

9. - Procédé selon l'une des revendications 1 à 8, **caractérisé en ce qu'**on choisit chaque précurseur organométallique, le milieu solvant et chaque ligand de façon à obtenir une composition hydrocompatible de nanocristaux métalliques comprenant au moins un métal à l'état cristallin choisi parmi l'or, l'argent, le platine, le rhodium, le fer, le cobalt, le cuivre, le nickel, le zinc, l'étain, le titane, le manganèse, le chrome, le vanadium, l'indium, le ruthénium, le palladium, le molybdène, le niobium, le zirconium, le tantale, l'aluminium, le gallium, le tungstène, rhénium, l'osmium, l'iridium.

10. - Procédé selon l'une des revendications 1 à 9, **caractérisé en ce qu'**on choisit chaque précurseur organométallique, le milieu solvant et chaque ligand de façon à obtenir une composition hydrocompatible de nanocristaux métalliques présentant au moins une dimension comprise entre 1 nm et 5 nm.

11. - Composition de nanoparticules métalliques à l'état cristallin, dites nanocristaux métalliques, **caractérisée en ce qu'**elle comprend au moins un ligand, dit ligand PEG, choisi dans le groupe des composés organiques solubles dans l'eau comprenant au moins une chaîne carbonée :
- comprenant au moins un groupement polyoxyéthylène [-OCH₂CH₂]ₙ, n étant un entier supérieur à 1,
- dont au moins une extrémité est fonctionnalisée par un groupement de coordination choisi parmi une amine primaire -R³NH₂, un groupement carboxylique -R⁴COOH, un groupement thiol -R⁵SH, un groupement phosphine -R⁶P(Ph)₂, Ph représentant le phényle, un groupement phosphonate choisi parmi -PO(OR⁷)(OR⁸), -PO(O⁻)₂, et -PO(O⁻)(OH) ; R³, R⁴, R⁵, R⁶ représentant un groupement comprenant au moins une chaîne aliphatique, R⁷ et R⁸ étant choisis parmi un atome d'hydrogène et un groupement comprenant au moins une chaîne aliphatique,
de sorte que cette composition de nanocristaux est hydrocompatible et organocompatible.

12. - Composition selon la revendication 11, **caractérisée en ce qu'**il s'agit d'une solution colloïdale aqueuse.

13. - Composition selon l'une des revendications 11 ou 12, **caractérisée en ce que** les nanocristaux métalliques comprennent au moins un métal à l'état cristallin choisi parmi l'or, l'argent, le platine, le rhodium, le fer, le cobalt, le cuivre, le nickel, le zinc, l'étain, le titane, le manganèse, le chrome, le vanadium, l'indium, le ruthénium, le palladium, le molybdène, le niobium, le zirconium, le tantale, l'aluminium, le gallium, le tungstène, le rhénium, l'osmium, l'iridium.

14. - Composition selon l'une des revendications 11 à 13, **caractérisée en ce que** les nanocristaux métalliques présentent au moins une dimension comprise entre 1 nm et 5 nm.

15. - Composition selon l'une des revendications 11 à 14, **caractérisée en ce que** les nanocristaux métalliques comprennent au moins un métal oxydable et sont au moins partiellement oxydés.

## Patentansprüche

1. Verfahren zur Herstellung einer Zusammensetzung aus Metallnanopartikeln im kristallinen Zustand, Metallnanokristalle genannt, ausgehend von mindestens einem metallorganischen Vorläufer, wobei:
- eine flüssige Lösung aus mindestens einem metallorganischen Vorläufer in einem Lösungsmedium ausgeführt wird, in Gegenwart von mindestens einer Verbindung, Ligand genannt, mindestens eine Kohlenstoffkette aufweisend, von der mindestens ein Ende durch eine Koordinierungsgruppe funktionalisiert ist, die mindestens ein Heteroatom umfasst, und in dem Lösungsmedium löslich,
- mindestens ein Reduktionsmittel im Hinblick auf jeden metallorganischen Vorläufer unter Reaktionsbedingungen zum Wirken auf diese flüssige Lösung gebracht wird, die dazu geeignet sind, die Bildung der Metallnanokristalle direkt hervorzurufen,
**dadurch gekennzeichnet, dass** ausgewählt wird:
- mindestens ein Ligand, PEG-Ligand genannt, in der Gruppe der wasserlöslichen organischen Liganden, die mindestens eine Kohlenstoffkette umfassen, die mindestens eine Polyoxyethylengruppe [-OCH₂CH₂]ₙ aufweist, wobei n eine Ganzzahl größer als 1 ist, und von der mindestens ein Ende durch eine Koordinierungsgruppe funktionalisiert ist, die ausgewählt ist aus einem primären Amin -R³NH₂, einer Carboxylgruppe -R⁴COOH, einer Thiolgruppe -R⁵SH, einer Phosphingruppe -R⁶P (Ph)₂, wobei Ph für das Phenyl steht, einer Phosphonatgruppe, die aus -PO (OR⁷) (OR⁸), -PO(O⁻)₂, und -PO(O⁻) (OH) ausgewählt ist; wobei R³, R⁴, R⁵, R⁶ für eine Gruppe stehen, die mindestens eine aliphatische Kette umfasst, R⁷ und R⁸ aus einem Wasserstoffatom und einer Gruppe ausgewählt sind, die mindestens eine aliphatische Kette umfasst,
- das Lösungsmedium derart, dass jeder PEG-Ligand in diesem Lösungsmedium löslich ist,
und derart, dass eine wasserkompatible und organisch kompatible Zusammensetzung aus Metallnanokristallen direkt in einem Schritt erhalten wird.

2. Verfahren nach Anspruch 1, **dadurch gekennzeichnet, dass** mindestens ein PEG-Ligand verwendet wird, der der folgenden allgemeinen Formel (I) entspricht:
R¹ [OCH₂CH₂]ₙOR² (I)
bei der;
- R¹ ausgewählt ist aus einer primären Aminogruppe -R³NH₂, einer Carboxylgruppe -R⁴COOH, einer Thiolgruppe -R⁵SH, einer Phosphingruppe -R⁶P (Ph)₂, wobei Ph für das Phenyl steht, einer Phosphonatgruppe, die aus - PO (OR⁷) (OR⁸), -PO (O⁻)₂, und -PO(O⁻) (OH) ausgewählt ist; wobei R³, R⁴, R⁵, R⁶ für eine Gruppe stehen, die mindestens eine aliphatische Kette umfasst, R⁷ und R⁸ aus einem Wasserstoffatom und einer Gruppe ausgewählt sind, die mindestens eine aliphatische Kette umfasst,
- R² ausgewählt ist aus einem Wasserstoffatom, einer Alkylgruppe, einer unverzweigten Fettkette, einer primären Aminogruppe -R³NH₂, einer Carboxylgruppe -R⁴COOH, einer Thiolgruppe -R⁵SH, einer Phosphingruppe -R⁶P (Ph)₂, wobei Ph für das Phenyl steht, einer Phosphonatgruppe, die aus -PO (OR⁷) (OR⁸), -PO(O⁻)₂, und -PO(O-) (OH) ausgewählt ist; wobei R³, R⁴, R⁵, R⁶ für eine Gruppe stehen, die mindestens eine aliphatische Kette umfasst, R⁷ und R⁸ aus einem Wasserstoffatom und einer Gruppe ausgewählt sind, die mindestens eine aliphatische Kette umfasst,
- n eine Ganzzahl größer als 1 ist.

3. Verfahren nach einem der Ansprüche 1 oder 2, **dadurch gekennzeichnet, dass** jeder PEG-Ligand eine mittlere molare Masse im Bereich zwischen 300 g.mol⁻¹ und 20 000 g.mol⁻¹ - insbesondere zwischen 750 g.mol⁻¹ und 3000 g.mol⁻¹ - aufweist.

4. Verfahren nach einem der Ansprüche 1 bis 3, **dadurch gekennzeichnet, dass** mindestens ein PEG-Ligand, Amino/Carboxy-PEG genannt, ausgewählt wird in der Gruppe der Amine und der Carbonsäuren, mindestens eine Kohlenstoffkette umfassend, die mindestens eine [-OCH₂CH₂]ₙ-Gruppe aufweist, wobei n eine Ganzzahl größer als 1 ist, und wasserlöslich.

5. Verfahren nach Anspruch 4, **dadurch gekennzeichnet, dass** mindestens ein Amino/Carboxyl-PEG-Ligand ausgewählt wird aus den α-Amino-poly(ethylenglykol), den Bis-amino-poly(ethylenglykol), den α-Carboxyl-poly(ethylenglykol), den Bis-carboxy-poly(ethylenglykol), und den α-Amino-ω-carboxyl-poly(ethylenglykol).

6. Verfahren nach einem der Ansprüche 1 bis 5, **dadurch gekennzeichnet, dass** mindestens ein Amino/Carboxyl-PEG-Ligand verwendet wird, ausgewählt in der Gruppe, die umfasst:
- Poly(ethylenglykol) bis(3-propylamin) der Formel H₂NC₃H₆ [OCH₂CH₂]ₙOC₃H₆NH₂ und mit einer molaren Masse im Bereich von 1500 g.mol⁻¹,
- α-(2-Ethylamin)-methoxy(ethylenglykol) der Formel H₃C[OCH₂CH₂]ₙOC₂H₄NH₂ und mit einer molaren Masse im Bereich von 750 g.mol^{-l},
- Methylether-poly(ethylenglykol) der Formel H₃C[OCH₂CH₂]ₙO-CH₂-COOH und mit einer molaren Masse im Bereich von 3000 g.mol⁻¹.

7. Verfahren nach einem der Ansprüche 1 bis 6, **dadurch gekennzeichnet, dass** das Lösungsmedium ein Lösungsmittel umfasst, das aus THF, Toluol, Anisol und Mesitylen ausgewählt ist.

8. Verfahren nach einem der Ansprüche 1 bis 7, **dadurch gekennzeichnet, dass** die Produktion der Nanokristalle bei einer Temperatur im Bereich zwischen 0°C und 300°C - insbesondere bei Umgebungstemperatur - ausgeführt wird.

9. Verfahren nach einem der Ansprüche 1 bis 8, **dadurch gekennzeichnet, dass** jeder metallorganische Vorläufer, das Lösungsmedium und jeder Ligand derart ausgewählt werden, dass eine wasserkompatible Zusammensetzung aus Metallnanokristallen erhalten wird, die mindestens ein Metall im kristallinen Zustand umfasst, das aus Gold, Silber, Platin, Rhodium, Eisen, Kobalt, Kupfer, Nickel, Zink, Zinn, Titan, Mangan, Chrom, Vanadium, Indium, Ruthenium, Palladium, Molybdän, Niob, Zirkonium, Tantal, Aluminium, Gallium, Wolfram, Rhenium, Osmium, Iridium ausgewählt ist.

10. Verfahren nach einem der Ansprüche 1 bis 9, **dadurch gekennzeichnet, dass** jeder metallorganische Vorläufer, das Lösungsmedium und jeder Ligand derart ausgewählt werden, dass eine wasserkompatible Zusammensetzung aus Metallnanokristallen erhalten wird, die mindestens eine Abmessung im Bereich zwischen 1 nm und 5 nm aufweisen.

11. Zusammensetzung aus Metallnanopartikeln im kristallinen Zustand, Metallnanokristalle genannt, **dadurch gekennzeichnet, dass** sie mindestens einen Liganden, PEG-Ligand genannt, umfasst, der in der Gruppe der wasserlöslichen organischen Verbindungen ausgewählt ist, die mindestens eine Kohlenstoffkette umfassen:
- die mindestens eine Polyoxyethylengruppe [-OCH₂CH₂]ₙ umfasst, wobei n eine Ganzzahl größer als 1 ist,
- von der mindestens ein Ende durch eine Koordinierungsgruppe funktionalisiert ist, die ausgewählt ist aus einem primären Amin -R³NH₂, einer Carboxylgruppe -R⁴COOH, einer Thiolgruppe -R⁵SH, einer Phosphingruppe -R⁶P (Ph)₂, wobei Ph für das Phenyl steht, einer Phosphonatgruppe, die aus -PO (OR⁷) (OR⁸), -PO(O⁻)₂, und -PO(O-)(OH) ausgewählt ist; wobei R³, R⁴, R⁵, R⁶ für eine Gruppe stehen, die mindestens eine aliphatische Kette umfasst, R⁷ und R⁸ aus einem Wasserstoffatom und einer Gruppe ausgewählt sind, die mindestens eine aliphatische Kette umfasst,
so dass diese Zusammensetzung aus Nanokristallen wasserkompatibel und organisch kompatibel ist.

12. Zusammensetzung nach Anspruch 11, **dadurch gekennzeichnet, dass** es sich um eine kolloidale wässrige Lösung handelt.

13. Zusammensetzung nach einem der Ansprüche 11 oder 12, **dadurch gekennzeichnet, dass** die Metallnanokristalle mindestens ein Metall im kristallinen Zustand umfassen, das aus Gold, Silber, Platin, Rhodium, Eisen, Kobalt, Kupfer, Nickel, Zink, Zinn, Titan, Mangan, Chrom, Vanadium, Indium, Ruthenium, Palladium, Molybdän, Niob, Zirkonium, Tantal, Aluminium, Gallium, Wolfram, Rhenium, Osmium, Iridium ausgewählt ist.

14. Zusammensetzung nach einem der Ansprüche 11 bis 13, **dadurch gekennzeichnet, dass** die Metallnanokristalle mindestens eine Abmessung im Bereich zwischen 1 nm und 5 nm aufweisen.

15. Zusammensetzung nach einem der Ansprüche 11 bis 14, **dadurch gekennzeichnet, dass** die Metallnanokristalle mindestens ein oxidierbares Metall umfassen und mindestens teilweise oxidiert sind.

## Claims

1. - A method for preparing a composition of metal nanoparticles in the crystalline state, called metal nanocrystals, from at least one organometallic precursor, in which:
- a liquid solution of at least one organometallic precursor in a solvent medium in the presence of at least one compound, called ligand, which has at least one carbon chain, at least one end of which is functionalized by a coordination grouping including at least one hetero atom, and is soluble in said solvent medium is prepared,
- at least one reducing agent with regard to each organometallic precursor is allowed to act on this liquid solution under reaction conditions suitable for directly causing the formation of metal nanocrystals,
**characterised in that** the following are chosen:
- at least one ligand, called PEG ligand, from the group of organic ligands which are soluble in water and include at least one carbon chain which has at least one polyoxyethylene grouping [-OCH₂CH₂]ₙ, n being an integer higher than 1, and at least one end of which is functionalized by a coordination grouping chosen from a primary amine -R³NH₂, a carboxyl grouping -R⁴COOH, a thiol grouping -R⁵SH, a phosphine grouping -R⁶P(Ph)₂, Ph representing phenyl, a phosphonate grouping chosen from - PO(OR⁷)(OR⁸), -PO(O⁻)₂ and -PO(O⁻)(OH); R³, R⁴, R⁵, R⁶ representing a grouping including at least one aliphatic chain, R⁷ and R⁸ being chosen from a hydrogen atom and a grouping including at least one aliphatic chain,
- said solvent medium such that each PEG ligand is soluble in this solvent medium,
and such that a water-compatible and organic-compatible composition of metal nanocrystals is obtained directly in one stage.

2. - The method according to claim 1, **characterised in that** at least one PEG ligand corresponding to the following general formula (I):
R¹[OCH₂CH₂]ₙOR² (I)
in which;
- R¹ is chosen from a primary amine grouping -R³NH₂, a carboxyl grouping -R⁴COOH, a thiol grouping -R⁵SH, a phosphine grouping -R⁶P(Ph)₂, Ph representing phenyl, a phosphonate grouping chosen from -PO(OR⁷)(OR⁸), -PO(O⁻)₂ and -PO(O⁻)(OH); R³, R⁴, R⁵, R⁶ representing a grouping containing at least one aliphatic chain, R⁷ and R⁸ being chosen from a hydrogen atom and a grouping containing at least one aliphatic chain,
- R² is chosen from a hydrogen atom, an alkyl grouping, an unbranched fatty chain, a primary amine grouping -R³NH₂, a carboxyl grouping -R⁴COOH, a thiol grouping - R⁵SH, a phosphine grouping -R⁶P(Ph)₂, Ph representing phenyl, a phosphonate grouping chosen from -PO(OR⁷)(OR⁸), -PO(O⁻)₂ and -PO(O⁻)(OH); R³, R⁴, R⁵, R⁶ representing a grouping including at least one aliphatic chain, R⁷ and R⁸ being chosen from a hydrogen atom and a grouping including at least one aliphatic chain,
- n is an integral number higher than 1,
is used.

3. - The method according to one of claims 1 or 2, **characterised in that** each PEG ligand used has an average molecular weight of between 300 g.mol⁻¹ and 20,000 g.mol⁻¹ - in particular between 750 g.mol⁻¹ and 3,000 g.mol⁻¹-.

4. - The method according to one of claims 1 to 3, **characterised in that** at least one PEG ligand, called amino/carboxy-PEG ligand, is chosen from the group of amines and carboxylic acids which include at least one carbon chain having at least one [OCH₂CH₂]ₙ grouping, n being an integer higher than 1, and are soluble in water.

5. - The method according to claim 4, **characterised in that** at least one amino/carboxy-PEG ligand is chosen from α-amino-poly(ethylene glycol), bis-amino-poly(ethylene glycol), α-carboxy-poly(ethylene glycol), bis-carboxy-poly(ethylene glycol) and α-amino-ω-carboxy-poly(ethylene glycol).

6. - The method according to one of claims 1 to 5, **characterised in that** at least one amino/carboxy-PEG ligand chosen from the group consisting of:
- bis(3-propylamine)-poly(ethylene glycol) of the formula H₂NC₃H₆[OCH₂CH₂]ₙOC₃H₆NH₂, having a molecular weight of the order of 1,500 g.mol⁻¹,
- α-(2-ethylamine)-methoxy(ethylene glycol) of the formula H₃C[OCH₂CH₂]ₙOC₂H₄NH₂, having a molecular weight of the order of 750 g.mol⁻¹,
- poly(ethylene glycol) methyl ether carboxylic acid ether of the formula H₃C[OCH₂CH₂]ₙO-CH₂-COOH, having a molecular weight of the order of 3,000 g.mol⁻¹,
is used.

7. - The method according to one of claims 1 to 6, **characterised in that** said solvent medium includes a solvent chosen from THF, toluene, anisole and mesitylene.

8. - The method according to one of claims 1 to 7, **characterised in that** the production of nanocrystals is carried out at a temperature of between 0 °C and 300 °C - in particular at ambient temperature-.

9. - The method according to one of claims 1 to 8, **characterised in that** each organometallic precursor, the solvent medium and each ligand are chosen such that a water-compatible composition of metal nanocrystals including at least one metal in the crystalline state chosen from gold, silver, platinum, rhodium, iron, cobalt, copper, nickel, zinc, tin, titanium, manganese, chromium, vanadium, indium, ruthenium, palladium, molybdenum, niobium, zirconium, tantalum, aluminum, gallium, tungsten, rhenium, osmium, iridium is obtained.

10. - The method according to one of claims 1 to 9, **characterised in that** each organometallic precursor, the solvent medium and each ligand are chosen such that a water-compatible composition of metal nanocrystals having at least one dimension of between 1 nm and 5 nm is obtained.

11. - A composition of metal nanoparticles in the crystalline state, called metal nanocrystals, **characterised in that** it includes at least one ligand, called PEG ligand, chosen from the group of organic compounds which are soluble in water and include at least one carbon chain:
- including at least one polyoxyethylene grouping [-OCH₂CH₂]ₙ, n being an integer higher than 1,
- at least one end of which is functionalized by a coordination grouping chosen from a primary amine -R³NH₂, a carboxyl grouping -R⁴COOH, a thiol grouping -R⁵SH, a phosphine grouping -R⁶P(Ph)₂, Ph representing phenyl, a phosphonate grouping chosen from -PO(OR⁷)(OR⁸), -PO(O⁻)₂ and -PO(O⁻)(OH); R³, R⁴, R⁵, R⁶ representing a grouping including at least one aliphatic chain, R⁷ and R⁸ being chosen from a hydrogen atom and a grouping including at least one aliphatic chain,
such that this composition of nanocrystals is water-compatible and organic-compatible.

12. - The composition according to claim 11, **characterised in that** it is an aqueous colloidal solution.

13. - A composition according to one of claims 11 or 12, **characterised in that** the metal nanocrystals include at least one metal in the crystalline state chosen from gold, silver, platinum, rhodium, iron, cobalt, copper, nickel, zinc, tin, titanium, manganese, chromium, vanadium, indium, ruthenium, palladium, molybdenum, niobium, zirconium, tantalum, aluminum, gallium, tungsten, rhenium, osmium, iridium.

14. - The composition according to one of claims 11 to 13, **characterised in that** the metal nanocrystals have at least one dimension of between 1 nm and 5 nm.

15. - The composition according to one of claims 11 to 14, **characterised in that** the metal nanocrystals include at least one oxidizable metal and are at least partially oxidized.
